# EUROPÄISCHE PATENTSCHRIFT

(11) **EP 0 727 904 B1**
(45) Veröffentlichungstag und Bekanntmachung des Hinweises auf die Patenterteilung: **19.06.2002**
(21) Anmeldenummer: 96101610.2
(22) Anmeldetag: 05.02.1996
(51) Int. Cl.: H04N 5/44

(54) **Verfahren und Schaltungsanordnung zur Flimmerreduktion für ein Gerät zur Videosignalverarbeitung**
Method and circuit arrangement for flicker reduction in a video signal processing device
Méthode et arrangement de circuit pour la réduction de scintillation dans un dispositif de traitement de signal vidéo

(30) Priorität: 20.02.1995 DE 19505758
(43) Veröffentlichungstag der Anmeldung: 21.08.1996
(73) Patentinhaber: Micronas Munich GmbH, 81541 München (DE)
(72) Erfinder: Blume, Holger, D-44793 Bochum (DE); Jostschulte, Klaus, D-44369 Dortmund (DE)
(74) Vertreter: Patentanwälte Westphal, Mussgnug & Partner

(56) Entgegenhaltungen:
- EP-A- 0 339 365
- EP-A- 0 554 495
- EP-A- 0 705 031
- DE-C- 4 434 728

## Beschreibung

Die Erfindung betrifft ein Verfahren zur Flimmerreduktion für ein Gerät zum Verarbeiten von in Zeilen aufgeteilten Videosignalen mit Auftrennung des Videosignals in einen hochfrequenten und niedrigfrequenten Signalanteil. Die Erfindung betrifft außerdem eine Schaltungsanordnung zur Durchführung des Verfahrens.

Bekanntlich wird bei der Fernsehsignalübertragung eine Folge von Halbbildern übertragen, die einen Zeilensprung aufweisen. Aus diesen Halbbildern wird im Fernsehgerät ein Bild mit doppelter Zeilenzahl erzeugt, indem die Halbbilder nacheinander zeilenverkämmt mit der empfangenen Halbbildrate wiedergegeben werden. Wegen der Trägheit des menschlichen Auges sieht der Betrachter das Vollbild. Ein auf die bloße Halbbildwiedergabe gestütztes Darstellungsverfahren hat eine Reihe von Nachteilen. Dazu gehören beispielsweise das Flackern von Kanten, das Flackern von größeren homogenen Flächen oder das Zeilenwandern, bei dem besonders bei vertikal langsam bewegten, homogenen Gegenständen die Zeilenstruktur eines Halbbilds sichtbar wird. Zur Vermeidung dieser Nachteile ist bekanntlich vorgesehen, die Wiedergaberate der Halbbilder zu verdoppeln.

In der europäischen Patentanmeldung EP 0 554 495 ist ein Verfahren zur Flimmerreduktion für ein Fernsehgerät beschrieben, bei dem das Videosignal in einen Höhen- und einen Tiefensignalanteil aufgetrennt wird. Auf die Höhen- und Tiefensignalanteile wird eine unterschiedliche Signalverarbeitung angewandt. Der Höhensignalanteil wird dabei zu einer im wesentlichen flimmerbefreiten Halbbildwiedergabefolge mit doppelter Halbbildrate umgesetzt, der Tiefensignalanteil auf eine im wesentlichen bewegungsrichtig darstellende Halbbildfolge. Nach der Verarbeitung werden Höhen- und Tiefenkanal wieder zusammengefaßt und zur Ansteuerung eines Bildschirms verwendet. Bei diesem Verfahren wird die zwischen den eingangsseitigen Halbbildern feststellbare Bewegung zur Umsetzung auf die verdoppelte Halbbildwiedergaberate berücksichtigt. Im Vergleich zu nicht vektorgestützen Verfahren liefert eine solche vektorgestützte Verarbeitung eine erhöhte Bildqualität bei der Wiedergabe. Im Hinblick auf die Realisierung ist aber zur Ermittlung und Zwischenspeicherung der Bewegungsvektoren ein erhöhter Schaltungsaufwand zu berücksichtigen.

Die Ermittlung eines Bewegungsvektorfeldes, das für Bildteile oder sogar jeden Bildpunkt die zwischen aufeinanderfolgenden empfangenen Halbbilder vorliegende Bewegung angibt, wird durch Einrichtungen zur Bewegungsschätzung empfängerseitig durchgeführt. Das Bewegungsvektorfeld kann auch senderseitig übertragen werden, wie es bei der gemäß dem MPEG-Standard kodierten Fernsehsignalübertragung vorgesehen ist. Bekanntlich sind die derart erhaltenen Bewegungsvektorfelder fehlerbehaftet. Diese Fehler werden beispielsweise durch verfahrensbedingte Unzulänglichkeiten der Bewegungsvektorermittlung oder durch spezielle Bildinhalte bedingt. Durch diese im Bewegungsvektorfeld enthaltenen Fehler wird auch die bewegungsvektorgestützte Aufwärtskonversion zur Flimmerbefreiung beeinflußt. Für das bekannte Verfahren ist deshalb vorgesehen, bei nicht zuverlässig ermittelbaren Bewegungsvektoren auf die Bewegungskompensation sowohl im Höhenkanal als auch im Tiefenkanal zu verzichten. Die Wiedergabequalität wird dadurch jedoch stark beeinträchtigt.

In der gemäß Artikel 54(3) und (4) EPÜ als nachveröffentlicht geltenden Europäischen Patentanmeldung EP-A2-0 705 031 sind ein Verfahren und eine Schaltungsanordnung zur Flimmerreduktion für ein Videosignalverarbeitungsgerät beschrieben, bei dem das Videosignal in einen Höhen- und Tiefenkanal aufgetrennt wird, um eine unterschiedliche Signalverarbeitung durchzuführen. Zur Verdoppelung der Halbbildrate werden Zwischenbilder mittels Mediantechniken erzeugt. Für den hochfrequenten Signalanteil wird eine im wesentlichen zeitlich wirkende Medianfilterung durchgeführt, für den niedrigfrequenten Signalanteil eine bewegungswichtige, zentral gewichtete Medianfilterung. Die Umsetzung erfolgt ohne Bewegunsgkompensation, so daß Bewegungsvektoren nicht berechnet werden.

Die Aufgabe der Erfindung besteht darin, das eingangs genannte Verfahren zur bewegungsvektorgestützten Flimmerbefreiung dahingehend zu verbessern, daß Fehler bei der Bewegungsvektorermittlung möglichst wenige wiedergabeseitige Störeinflüsse verursachen.

Erfindungsgemäß wird diese Aufgabe durch ein Verfahren gemäß den Merkmalen des Patentanspruchs 1 gelöst.

Eine Schaltungsanordnung zur Durchführung des Verfahrens ist in Patentanspruch 8 angegeben.

Durch die Verwendung von Medianfiltern im Höhenkanal wird bewirkt, daß bei fehlerhafter Bewegungsvektorermittlung die Auslöschung der Luminanz für den jeweiligen Bildpunkt dominiert, während bei Vorliegen eines korrekten Bewegungsvektors der Wert des verschobenen Bildpunktes dominiert. Im ersteren Fall wird der darzustellende Bildpunkt dann der vom Tiefenkanal bestimmt. Die Medianfilterung im Tiefenkanal bewirkt, daß bei der Bewegung einer flächenhaften Struktur diese in etwa in der Mitte der Verschiebung zwischen zwei eingangsseitigen Halbbildern in einem zu erzeugenden Zwischenbild dargestellt wird, während eine bewegte Linienstruktur eher ausgelöscht wird als an unkorrekter Stelle wiedergegeben zu werden. Durch die nichtlineare Filterwirkung der Medianfilter ergibt sich insgesamt ein fehlerstabiles Arbeiten.

Es ist vorteilhaft, Aufdeckungsbereiche zu berücksichtigen. Dies sind solche Bereiche von Bildpunkten, auf die kein Bewegungsvektor zeigt. Diese Bereiche werden von einer sich bewegenden Struktur von Halbbild zu Halbbild im Anschluß an das in Bewegungsrichtung hintere Ende der Struktur aufgedeckt. Hier ist ebenfalls zweckmäßig, den darzustellenden Bildpunkt durch den vom Tiefenkanal erzeugten Wert zu bestimmen.

Im Tiefenkanal wird vorzugsweise eine zentral gewichtete Mediänfilterung durchgeführt, sofern kein Aufdeckungsbereich vorliegt und ein Bewegungsvektor ermittelbar ist. Eine zentral gewichtete Medianfilterung sorgt dafür, daß flächenhaft bewegte Bereiche auch im Falle eines fehlerbehafteten Bewegungsvektors in etwa in der jeweiligen Bewegungsphase des zu erzeugenden Halbbilds dargestellt werden, während linienförmige Strukturen in diesem Fehlerfall ausgelöscht werden.

Bei korrektem Bewegungsvektor werden linienförmige Strukturen hingegen nicht ausgelöscht. Sofern aber ein Aufdeckungsbereich vorliegt, wird ein einfach gewichtetes Medianfilter mit im wesentlichen bewegungsrichtiger Filterung angewandt. Es wird dabei ein Bewegungsvektor berücksichtigt, sofern in einer Umgebung der Eingangsbildpunkte ein Bewegungsvektor vorliegt. Dadurch wird erreicht, daß durch das Medianfilter derjenige Bildpunktwert ausgewählt wird, der sich möglichst gut der Bildpunktumgebung anpaßt.

Die Erfindung wird anhand der in der Zeichnung dargestellten. Figuren nachfolgend im Detail erläutert.

Es zeigen:

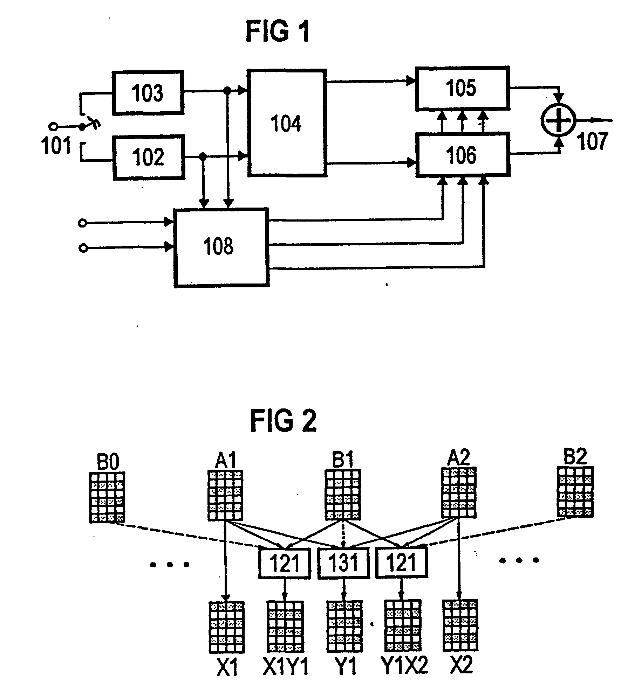

- Figur 1: ein Prinzipschaltbild einer erfindungsgemäßen Schaltungsanordnung,
- Figur 2: einen prinzipiellen Verfahrensablauf im Höhenkanal,
- Figur 3: ein Zugriffsschema der Medianfilterung im Höhenkanal für Zwischenbilder,
- Figur 4: ein Zugriffsschema im Höhenkanal für die in der Rasterlage umzusetzenden Halbbilder,
- Figur 5: ein prinzipiellen Verfahrensablauf im Tiefenkanal,
- Figur 6: ein Zugriffsschema der zentral gewichteten Medianfilterung im Tiefenkanal und
- Figur 7: ein Zugriffsschema der einfach gewichteten Medianfilterung im Tiefenkanal.

Die zeilenverkämmten Eingangshalbbilder mit einer ersten Rasterlage A und einer zweiten Rasterlage B werden an einem Anschluß 101 eingespeist. Die Folge wird im folgenden mit A0, B0, A1, B1, A2, B2, ... bezeichnet. Zur Zwischenspeicherung sind zwei Halbbildspeicher 102 und 103 vorgesehen, bei denen ausgangsseitig mit der doppelten Zeilenfrequenz ausgelesen wird. Über ein vertikales Trennfilter 104 werden Höhen- und Tiefensignalanteile der mit verdoppelter Zeilenfrequenz ausgelesenen Halbbilder ermittelt und einer Verarbeitungseinrichtung 105 zur Verarbeitung des Höhenkanals und einer Einrichtung 106 zur Verarbeitung des Tiefenkanals zugeführt. Die von den Einrichtungen 105, 106 erzeugten Signale werden additiv überlagert, so daß am Ausgang 107 ein auf die Bildwiedergabefrequenz von 100 Hz konvertiertes, flimmerbefreites Wiedergabesignal vorliegt.

Eine Einrichtung 108 ist zur Bildung von Vektorfeldern vorgesehen. Ihr werden die Koordinaten von Verschiebungsvektoren für jeden Punkt eines Halbbilds zugeführt. Die Bewegungsvektoren können senderseitig und zusammen mit den Bilddaten übertragen werden oder empfängerseitig aus den am Anschluß 101 vorliegenden Halbbildern berechnet werden. Unter Berücksichtigung der aus den Halbbildspeichern ausgelesenen Höhenund Tiefensignale wird ein projiziertes Vektorfeld bestimmt, das die Bewegungsvektoren für jeden Bildpunkt in der Bewegungsphase der in den Einrichtungen 105 und 106 zu erzeugenden Halbbilder angibt. Außerdem wird in der Einrichtung 108 die Aufdeckungsdetektion durchgeführt, wobei solche Mengen von Bildpunkten festgestellt werden, auf die kein Verschiebungsende eines Bewegungsvektors weist. Die von der Einrichtung 108 erzeugte Information wird in die Verarbeitungseinrichtungen 105, 106 eingespeist:.

Zur Bewegungsvektorprojektion eignet sich prinzipiell jedes bekannte Verfahren. Beispielsweise wird der Auftreffpunkt eines Bewegungsvektors, d.h. das bewegungsseitige Ende des Bewegungsvektors für das darzustellende Zwischenbild, interpoliert. Wenn ein Zwischenbild zeitlich zwischen zwei aufeinanderfolgend empfangenen Halbbilder A1, B1 zu erzeugen ist, dann wird das projizierte Vektorfeld dadurch ermittelt, daß der Bewegungsvektor halbiert und für diejenige Bildpunktstelle vorgesehen wird, auf die der Auftreffpunkt des Bewegungsvektors gerichtet ist. Weisen mehrere projizierte Vektoren auf die gleiche Bildpunktstelle des Zwischenbilds, so wird die Differenz zwischen Start- und Zielpunkt in den Ausgangshalbbildern A1, B1 berechnet. Es wird dann derjenige Vektor übernommen, dessen Bildpunktdifferenz zwischen Start- und Zielpunkt den geringsten Betrag liefert. Diesem Vorgehen liegt die praktische Erfahrung zugrunde, daß dieser so ermittelte Bewegungsvektor mit der höheren Wahrscheinlichkeit der tatsächlichen Bewegung am nächsten kommt. Solche Bildpunkte im Zwischenbild, auf die kein Auftreffpunkt eines Bewegungsvektors zeigt, sind die Aufdeckungsbereiche, die am Anschluß an das rückwärtige Ende einer bewegten Fläche entstehen. Für die Bildpunkte in einem Aufdeckungsbereich wird ein Aufdeckungskennzeichen im Speicher für das projezierte Vektorfeld der Einrichtung 108 vermerkt.

Nachfolgend wird die Filterung in der Einrichtung 105 für den Höhenkanal für Bildpunkte in einem Nichtaufdeckungsbereich beschrieben. Aus der eingangsseitigen Halbbildfolge A0, B0, A1, B1, A2, ... soll die Ausgangsfolge X1, X1Y1, Y1, Y1X2, X2,... berechnet werden. Die eingangsseitigen Halbbilder A0, A1, ... enthalten die ungeradzahligen Zeilen, die eingangsseitigen Halbbilder B0, B1, ... die geradzahligen Zeilen. Die Ausgangshalbbildfolge weist abwechselnd das erste und das zweite Zeilenraster auf. Die Halbbilder X1, Y1, X2, ... stellen die Bewegungsphase der Halbbilder A1, B1 bzw. A2 dar. Die Halbbilder X1Y1 und Y1X2 sind Zwischenhalbbilder, die zeitlich zwischen den Halbbildern X1, Y1 bzw. Y1, X2 darzustellen sind und folglich eine Bewegungsphase darstellen, die zwischen den Bewegungsphasen der Halbbild A1, B1 bzw. B1, A2 liegt.

Im einzelnen werden folgende Operationen ausgeführt. Bildpunkte des Halbbilds A1 werden direkt in Bildpunkte des Halbbilds X1 übernommen. Entsprechendes gilt für die Halbbilder X2 in bezug auf A2, mit denen ein neuer Wiederholungszyklus beginnt. Die Halbbilder X1Y1 und Y1X2 werden durch eine bewegungskompensierte 3-Punkt-Medianfilterung aus den beiden in der Bewegungsphase benachbarten eingangsseitigen Halbbildern berechnet. Alternativ kann eine 5-Punkt-Medianfilterung vorgesehen werden, die auch ein vorher bzw. nachher liegendes weiteres Halbbild berücksichtigt. Das Halbbild Y1 wird durch eine bewegungskompensierte Medianfilterung zur Rasterumsetzung aus den drei eingangsseitigen Halbbildern A1, B1, A2 errechnet.

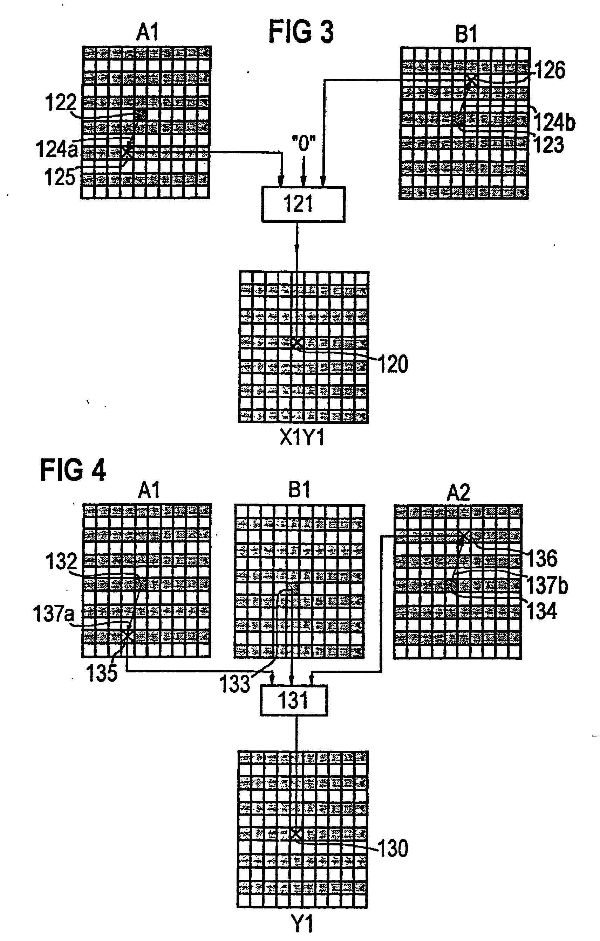

Gemäß dem in Figur 3a dargestellten Zugriffsschema für eine 3-Punkt-Medianfilterung zur Berechnung der Zwischenhalbbilder X1Y1, Y1X2 wird der Bildpunkt 120 im Ausgangshalbbild durch das Medianfilter 121 erzeugt. Das Beispiel ist speziell für das zu erzeugende Halbbild X1Y1 dargestellt. In den Halbbildern A1, B1 wird von der der Bildpunktstelle 120 entsprechenden Bildpunktstelle 122 bzw. 123 ausgegangen. Der für diese Bildpunktstelle ermittelte Bewegungsvektor 124 wird am Bildpunkt 122 in Rückwärtsbewegungsrichtung, am Bildpunkt 123 in Vorwärtsbewegungsrichtung angetragen. Der dann erhaltene Bildpunkt 125 bzw. 126 wird in das Medianfilter 121 eingespeist. Sollte wie beim Bildpunkt 126 ein außerhalb der Rasterlage liegender Bildpunkt vorliegen, wird eine Zwischenzeileninterpolation durchgeführt, zum Beispiel eine Mittelwertbildung aus den unmittelbar benachbart liegenden Bildpunkten. Ein weiterer Eingangswert für das Medianfilter 21 ist der Luminanzwert 0.

Durch das Medianfilter 121 werden bekanntlich die Eingangswerte der Größe nach geordnet und der mittlere Wert wird als Ausgangswert ausgewählt. Durch dieses Zugriffsschema im Höhenkanal für nicht aufgedeckte Bereiche wird erreicht, daß der Luminanzwert der Bildpunkte 125, 126 dominiert, sofern der Bewegungsvektor 124 fehlerfrei ist. Dann ist nämlich zu erwarten, daß die Bildpunkte 125, 126 in etwa die gleiche Luminanz aufweisen. Falls der Bewegungsvektor 124 für den Bildpunkt 120 fehlerhaft ermittelt worden sein sollte, ist anzunehmen, daß die Luminanzwerte der Bildpunkte 125, 126 voneinander abweichen. Dann wird durch das Medianfilter 121 wahrscheinlicherweise eher der fest eingespeiste Luminanzwert "0" ausgewählt, so daß über den Höhenkanal an der Stelle 120 keine Bildinformation für die Wiedergabe bereitgestellt wird. Die Bildpunktstelle 121 wird dann von der vom Tiefenkanal errechneten Bildinformation dominiert. Insgesamt wirkt dieses Medianfilter raster- und zeitdominant, da die Eingangswerte aus rasterrichtig liegenden Bildpunkten ausgewählt werden, die zeitlich versetzt sind.

Anstelle des 3-Punkt-Medianfilters 120 kann auch ein 5-Punkt-Medianfilter mit Mehrfachgewichtung von Bildpunkten verwendet werden. Die aus den Halbbildern A1, B1 entnommenen Bildpunkte werden in diesem Fall doppelt gewichtet. Außerdem können anstelle einer Interpolation eines Zwischenbildpunktes, wenn der Bewegungsvektor auf einem Zwischenbildpunkt zeigt, die unmittelbar benachbart liegenden Bildpunkte in jeweils einfacher Gewichtung verwendet werden. Die Rasterdominanz des Filters und des erzeugten Bildpunkts wird bei dieser Ausführungsform erhöht.

In einer Weiterbildung kann anstelle des festen Luminanzwerts "0" die Bildpunktinformation des dem Bildpunkt 120 entsprechenden Bildpunkts im Halbbild B0 in das Medianfilter, vorzugsweise das 5-Punkt-Medianfilter eingespeist werden. Dieser Wert weist die gleiche Rasterlage wie die Rasterlage des zu erzeugenden Halbbilds X1Y1 auf und verbessert dadurch die rasterdominante Wirkung dieses Filters. Zur Berechnung des anderen Zwischenhalbbilds Y1X2 ist spiegelbildlich der dem Bildpunkt 120 entsprechende Bildpunkt des Halbbilds B2 im Medianfilter 121 zu verwenden. Die Berücksichtigung der Bildinformation des dritten Halbbilds B0 bzw. B2 erfordert zusätzlichen Speicheraufwand, so daß ein Zugriff auf die zu verarbeitenden Daten eines weiteren Halbbilds ermöglicht wird.

Zur Berechnung des in der Rasterlage umgesetzten Bildes Y1 wird das in Figur 4 dargestellte Zugriffsschema für das Medianfilter 131 verwendet. Zur Ermittlung der Eingangsbildpunkte des Medianfilters 131 wird in den Halbbildern A1, B1, A2 von der der zu erzeugenden Bildpunktstelle 130 entsprechenden jeweiligen Bildpunktstelle 132, 133, 134 ausgegangen.

Der Bildpunkt 133 wird nach einer Zwischenzeileninterpolation in das Medianfilter 131 übernommen, von den Bildpunkten 132, 134 wird der für den Bildpunkt 130 gespeicherte Bewegungsvektor 137 in Rückwärts- bzw. Vorwärtsrichtung angesetzt. Die Luminanzwerte der sich ergebenden Bildpunkte 135 bzw. 136 werden als weitere Eingangswerte des Medianfilters 131 verwendet. Als Bewegungsvektor 137 wird zweckmäßigerweise derjenige Bewegungsvektor ausgewählt, der sich zwischen den Bildpunkten der eingangsseiten Halbbilder B1, A2 ergibt. Dieser Bewegungsvektor liegt bereits eingangsseitig vor bzw. läßt sich in einfacher Weise aus der Bewegungsdifferenz zwischen den eingangsseitigen Halbildern A1, B1 errechnen.

Da bei den in den Figuren 3, 4 gezeigten Zugriffsschemata die Medianfilter durch die entsprechenden Bildpunktstellen in aufeinanderfolgenden eingangsseitigen Halbbildern gespeist werden, werden zeitlich aufeinanderfolgende Luminanzwerte der jeweiligen Bildpunkte ausgewertet, so daß sich eine im wesentlichen zeitlich wirkende Medianfilterung ergibt. Diese zeitliche Wirkung ist wie bereits ausgeführt rasterdominant.

Im Höhenkanal werden diejenigen Bildbereiche der Zwischenbilder X1Y1 und Y1X2, für die ein Aufdeckungskennzeichen gespeichert ist, mit einer Luminanz von 0 belegt, so daß für diese Bildpunkte in einem Aufdeckungsbereich nur der im Tiefenkanal ermittelte Luminanzwert berücksichtigt wird.

Im Tiefenkanal wird folgender prinzipieller Verfahrensablauf durchgeführt. Das Halbbild X1 wird durch direkte Übernahme des Tiefensignalanteils des Halbbilds A1 erzeugt. Entsprechendes gilt für das Halbbild X2, mit dem ein neuer Zyklus beginnt. Das Halbbild Y1 wird durch eine Rasterumsetzung aus den Tiefensignalanteilen nur des Halbbilds B1 errechnet. Zur Rasterumsetzung wird zweckmäßigerweise eine lineare Zwischenzeileninterpolation 141, zum Beispiel eine Mittelwertbildung aus benachbarten Bildpunkten durchgeführt. Zur Erzeugung der Zwischenhalbbilder X1Y1 und Y1X2 wird eine bewegungskompensierte Medianfilterung 142 ausgeführt, der die dem Zwischenbild X1Y1 und Y1X2 in der Bewegungsphase benachbart liegenden eingangsseitigen Halbbilder A1, B1 bzw. B1, A2 zugeführt werden.

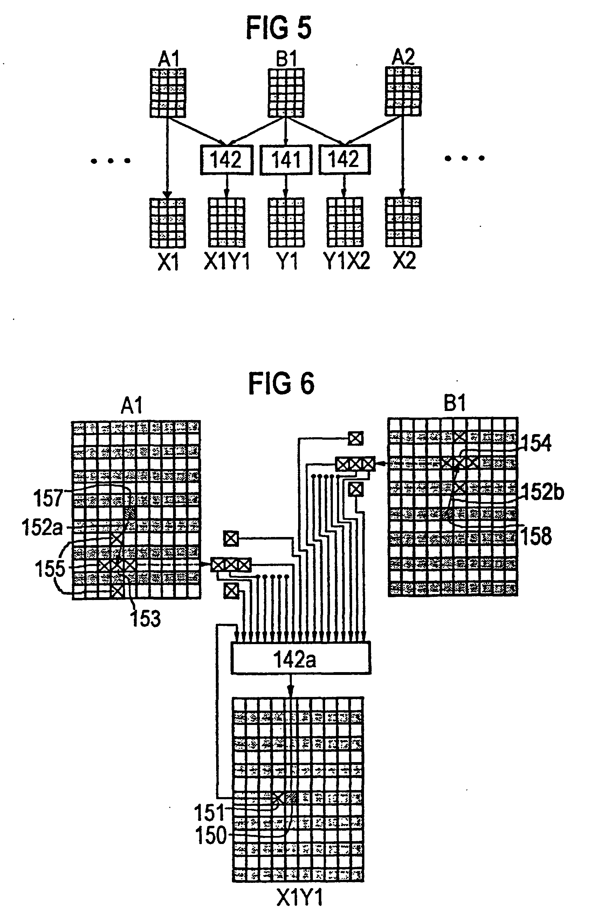

In den nicht aufgedeckten Bereichen des Tiefenkanals wird gemäß Figur 6 eine Medianfilterung 142a mit 19 Eingangswerten durchgeführt. Durch die Medianfilterung 142a wird der Bildpunkt 150 erzeugt. Bei der Ermittlung der Eingangswerte des Medianfilters 142a wird von den dem Bildpunkt 150 entsprechenden Bildpunktstellen 157, 158 in den Halbbild A1, B1 ausgegangen. An diesen Bildpunkten wird der für die Bildpunktstelle 150 gespeicherte Bewegungsvektor 152 in Rückwärtsrichtung bzw. Vorwärtsrichtung angesetzt. Es ergibt sich der Bildpunkt 153 bzw. 154. Diese Bildpunkte 153, 154 werden fünffach gewichtet in das 19-Punkt-Medianfilter 142a eingespeist. Darüber hinaus werden in einfacher Gewichtung die Umgebungsbildpunkte 155 des Bildpunkts 153 eingespeist.
Entsprechendes gilt für den Bildpunkt 154. Sollte der Auftreffpunkt eines Bewegungsvektors auf einem Zwischenzeilenpunkt liegen, wird wiederum eine Zwischenzeileninterpolation durchgeführt. Außerdem wird in das Medianfilter 142a der unmittelbar vorher bestimmte Bildpunkt 151 eingespeist. Diese zentral gewichtete Medianfilterung 142a wirkt derart, daß flächenhafte Strukturen in etwa in der Mitte der Bewegungsphase zwischen den Halbbildern A1, B1 im zu erzeugenden Halbbild X1Y1 dargestellt werden. Linienhafte Strukturen werden nur dann im Halbbild X1Y1 dargestellt, wenn der Bewegungsvektor 152 korrekt ermittelt wurde, so daß die Bildpunkte 153, 154 dieser Bewegung der Linienstruktur exakt folgen. Sofern der Bewegungsvektor 152 fehlerhaft ermittelt wurde, ist anzunehmen, daß die Bildpunkte 153, 154 verschiedene Luminanzwerte aufweisen. Diese werden dann im zu erzeugenden Zwischenbild unterdrückt. Wenn das Medianfilter 142a ausgeglichene Eingangswerte aufweist, erhält der Luminanzwert des Bildpunkts 151 besonderes Gewicht. In diesem Fall ist erstrebt, daß der Bildpunkt 150 sich an die durch den Bildpunkt 151 vorgegebene Umgebung anpaßt. Für das Zwischenhalbbild Y1X2 wird ein entsprechendes Zugriffsschema durchgeführt.

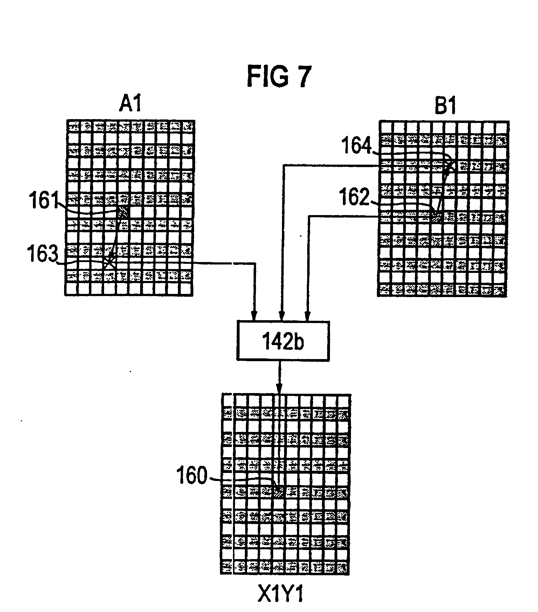

Für Aufdeckungsbereiche in den Zwischenhalbbildern X1Y1 und Y1X2 wird ein Zugriffsschema gemäß Figur 7 durchgeführt. Das Medianfilter 142 wird als 3-Punkt-Medianfilter 142b realisiert. In den Halbbildern A1, B1 wird derjenige Bildpunkt 161 bzw. 162 ausgewählt, der dem Eildpunkt 160 des zu erzeugenden Halbbilds X1Y1 entspricht. Sofern in der Umgebung der Bildpunkte 161, 162, vorzugsweise der unmittelbar umgebenden 8 Bildpunkte, ein Bewegungsvektor ermittelt wurde, wird dieser Bewegungsvektor an den Bildpunkt 161, 162 in Rückwärts- bzw. Vorwärtsbewegungsrichtung angesetzt. Dieser Fall ist in Figur 7 dargestellt. Das 3-Punkt-Medianfilter 142b wird mit dem Bildpunkt 163 des Halbbilds A1 gespeist sowie mit dem Anfangs- und Endpunkt der Bewegung im Halbbild B1, d. h. den Bildpunkten 162 und 164. Sofern kein Bewegungsvektor ermittelbar ist, wird der Bildpunkt 162 zweifach gewichtet in das Medianfilter 142b eingespeist. Es wird dadurch bewirkt, daß in das Filter 142b zeitlich aufeinanderfolgende Bildinformation eingespeist wird.

Insgesamt werden durch die in den Figuren 6, 7 dargestellten Zugriffsschemata im Tiefenkanal für nicht aufgedeckte bzw. aufgedeckte Bildbereiche Medianfilterungen durchgeführt, die ein mit hoher Wahrscheinlichkeit bewegungsphasenrichtig ermitteltes Ergebnis liefern, da im Fall der Filterung gemäß Figur 7 die vertikalen Bildanteile gegenüber der zeitlichen Versetzung der Eingangsbildpunkte dominieren und im Zugriffsschema der Figur 6 ebenfalls das bewegungsrichtige Ergebnis dominiert. Wichtig für bewegungsrichtige Wiedergabe im Tiefenkanal ist, daß die beiden Zugriffsschemata der Figuren 6, 7 im wesentlichen ortsdominant sind. Durch die Ortsdominanz der Filterung gemäß Figur 6 wird bei einem fehlerbehafteten Bewegungsvektor die gute Rückfallqualität des statistischen Medianfilterverfahrens wirksam. Bei der Filterung gemäß Figur 7 wird ein Bildpunkt erzeugt, der sich wegen der Übernahme eines Nachbarvektors gut in die Umgebung einpaßt.

Zusammengefaßt liegt ein in bezug auf Signalstörungen und fehlerhafte Bewegungsvektorermittlung fehlertolerantes Aufwärtskonversionsverfahren zur Flimmerbefreiung vor. Bekanntlich sind Medianfilter schaltungstechnisch relativ einfach realisierbar, da im wesentlichen Größenvergleichsoperationen auszuführen sind. Die schaltungstechnische Realisierung des Systems ist demnach mit standardgemäßen Komponenten durchführbar. Im Vergleich zur vektorgestützten Interpolation nach dem Stand der Technik ergibt sich aber eine erhöhte Bildqualität.

## Patentansprüche

1. Verfahren zur Flimmerreduktion für ein Gerät zum Verarbeiten von in Zeilen aufgeteilten Videosignalen mit den Merkmalen:
- ein eingangsseitig zuführbares Videosignal weist Halbbilder mit Zeilensprung (A0, B0, A1, B1, A2, B2, ...) und mit einem ersten und einem zweiten Zeilenraster (A0, A1, A2; B0, B1, B2) auf,
- das Videosignal wird in einen hochfrequenten Signalanteil und einen niedrigfrequenten Signalanteil aufgetrennt,
- auf den hochfrequenten Signalanteil wird eine im wesentlichen flimmerbefreiend wirkende Medianfilterung (121, 131) zur Umsetzung auf Halbbilder mit verdoppelter Halbbildrate durchgeführt,
- auf den niederfrequenten Signalanteil wird eine im wesentlichen bewegungsrichtig wirkende Medianfilterung (141, 142) zur Umsetzung auf Halbbilder mit verdoppelter Halbbildrate durchgeführt,
- die auf die verdoppelte Halbbildrate umgesetzten Halbbilder der hochfrequenten und niederfrequenten Signalanteile werden zusammengefaßt,
- für jeden der Signalanteile werden Halbbilder mit abwechselnd dem ersten und dem zweiten Zeilenraster (X1, Y1, X2; X1Y1, Y1X2) mit verdoppelter Halbbildrate erzeugt,
- für jeden der Signalanteile werden erste (X1), zweite (X1Y1), dritte (Y1) und vierte (Y1X2) Halbbilder erzeugt, von denen
- das erste (X1) aus dem eingangsseitigen Halbbild des ersten Zeilenrasters (A1) gebildet wird,
- das zweite (X1Y1) zumindest aus den eingangsseitigen Halbbildern des ersten und zweiten Zeilenrasters (A1, B1), deren Bildinhalt auf die Bewegungsphase des zu erzeugenden zweiten Halbbilds umgesetzt wird,
- das dritte (Y1) zumindest aus dem eingangsseitigen Halbbild des zweiten Zeilenrasters (B1) durch eine Rasterumsetzung,
- das vierte (Y1 X2) zumindest aus dem eingangsseitigen Halbbild des zweiten Zeilenrasters (B1) und einem diesem nachfolgenden Halbbild des ersten Zeilenrasters (A2), deren Bildinhalt auf die zu Bewegungsphase des zu erzeugenden vierten Halbbilds umgesetzt wird, wobei
- zur Umsetzung auf die Bewegungsphase des jeweiligen zu erzeugenden Halbbilds für jeden Bildpunkt dieses Halbbilds ein Bewegungsvektor in Abhängigkeit von der Bewegungsphase, die er in bezug auf die Bildpunkte seiner eingangsseitigen Halbbilder, aus denen er erzeugt wird, einnimmt, ermittelt wird.

2. Verfahren nach Anspruch 1,
**dadurch gekennzeichnet, daß**
für die zu erzeugenden Halbbilder Bildpunkte, die in Aufdeckungsbereichen (108) liegen, ermittelt werden, daß für einen in einem Aufdeckungsbereich liegenden Bildpunkt des jeweiligen zu erzeugenden Halbbilds für den hochfrequenten Signalanteil eine Luminanz von Null vorgegeben wird und für den niedrigfrequenten Signalanteil eine Medianfilterung (142b) mit einfach gewichteten Eingangsbildpunkten durchgeführt wird, daß für einen nicht in einem Aufdeckungsbereich liegenden Bildpunkt für den hochfrequenten Signalanteil eine im wesentlichen rasterdominant wirkende Medianfilterung (121) durchgeführt wird und für den niedrigfrequenten Signalanteil eine zentral gewichtete Medianfilterung (142a).

3. Verfahren nach Anspruch 1 oder 2,
**dadurch gekennzeichnet, daß** zur Bildung des zweiten Halbbilds (X1Y1) des hochfrequenten Signalanteils ein an einer Bildpunktstelle (120) zu erzeugender Bildpunkt gebildet wird durch eine Medianfilterung aus denjenigen Bildpunkten (125, 126) der eingangsseitigen Halbbilder des ersten und zweiten Zeilenrasters (A1, B1), die sich durch eine Verschiebung der der Bildpunktstelle entsprechenden Bildpunktstellen (122, 123) um den für diesen Bildpunkt ermittelten Bewegungsvektor (124) in Rückwärtsbewegungsrichtung bzw. Vorwärtsbewegungsrichtung ergeben, und aus einem vorgegebenen Wert ("0") und daß zur Bildung des vierten Halbbilds (Y1X2) des hochfrequenten Signalanteils ein an einer Bildpunktstelle zu erzeugender Bildpunkt gebildet wird durch eine Medianfilterung aus denjenigen Bildpunkten des eingangsseitigen Halbbildes des zweiten Zeilenrasters (B1) und des darauffolgenden eingangsseitigen Halbbildes des ersten Zeilenrasters (A2), die sich durch eine Verschiebung der der Bildpunktstelle entsprechenden Bildpunktstellen um den für diesen Bildpunkt ermittelten Bewegungsvektor in Rückwärtsbewegungsrichtung bzw. Vorwärtsbewegungsrichtung ergeben, und aus dem vorgegebenen Wert.

4. Verfahren nach Anspruch 1, 2 oder 3,
**dadurch gekennzeichnet, daß**
zur Bildung des dritten Halbbilds (Y1) des hochfrequenten Signalanteils ein an einer Bildpunktstelle (130) zu erzeugender Bildpunkt gebildet wird durch eine Medianfilterung aus denjenigen Bildpunkten (135, 136) des eingangsseitigen Halbbildes des ersten Zeilenrasters (A1) und des darauffolgenden eingangsseitigen Halbbildes des ersten Zeilenrasters (A2), die sich durch eine Verschiebung der der Bildpunktstelle entsprechenden Bildpunktstellen (132, 134) um den für diesen Bildpunkt ermittelten Bewegungsvektor (137) in Rückwärtsbewegungsrichtung bzw. Vorwärtsbewegungsrichtung ergeben, und aus dem durch eine Zwischenzeileninterpolation erhaltenen Bildpunkt (133) des eingangsseitigen Halbbilds des zweiten Zeilenrasters (B1) der entsprechenden Bildpunktstelle.

5. Verfahren nach einem der Ansprüche 2 bis 4,
**dadurch gekennzeichnet, daß**
die zentral gewichtete Medianfilterung (142a) für die Ermittlung der Bildpunkte des zweiten und vierten Halbbilds (X1Y1, Y1X2) des niedrigfrequenten Signalanteils durchgeführt wird, wobei ein an einer Bildpunktstelle (150) zu erzeugender Bildpunkt gebildet wird durch eine Medianfilterung (142a) aus denjenigen Bildpunkten des eingangsseitigen Halbbildes des ersten und zweiten Zeilenrasters (A1, B1) bzw. des zweiten Zeilenrasters (B1) und des darauffolgenden ersten Zeilenrasters (A2), die sich durch eine Verschiebung der der Bildpunktstelle entsprechenden Bildpunktstellen (157, 158) um den für diesen Bildpunkt ermittelten Bewegungsvektor (152) in Rückwärtsbewegungsrichtung bzw. Vorwärtsbewegungsrichtung ergeben, wobei die Bildpunkte dieser sich ergebenden Bildpunktstellen (153, 154) in mehrfacher Gewichtung berücksichtigt werden, die diese Bildpunktstelle umgebenden Bildpunkte (155) und ein unmittelbar vorher erzeugter Bildpunkt (151) des zweiten bzw. vierten zu erzeugenden Halbbilds in einfacher Gewichtung .

6. Verfahren nach Anspruch 2 bis 5,
**dadurch gekennzeichnet, daß**
die einfach gewichtete Medianfilterung (142b) für die Ermittlung der Bildpunkte des zweiten und vierten Halbbilds (X1Y1, Y1X2) des niedrigfrequenten Signalanteils durchgeführt wird, wobei ein an einer Bildpunktstelle (160) zu erzeugender Bildpunkt gebildet wird durch eine Medianfilterung (142b) aus denjenigen Bildpunkten des eingangsseitigen Halbbildes des ersten und zweiten Zeilenrasters (A1, B1) bzw. des zweiten Zeilenrasters (B1) und des darauffolgenden ersten Zeilenrasters (A2), die sich durch eine Verschiebung der der Bildpunktstelle entsprechenden Bildpunkte (161, 162) um den für diesen Bildpunkt (160) ermittelten Bewegungsvektor in Rückwärtsbewegungsrichtung bzw. Vorwärtsbewegungsrichtung ergeben, sowie durch den entsprechenden Bildpunkt (162) des Halbbilds des zweiten Zeilenrasters (B1) bzw. des darauffolgenden ersten Zeilenrasters (A2).

7. Verfahren nach Anspruch 6,
**dadurch gekennzeichnet, daß** zur Ermittlung des Bewegungsvektors für die einfach gewichtete Medianfilterung ein in seiner Umgebung (155) vorliegender Bewegungsvektor ausgewählt wird und, falls ein solcher nicht vorliegt, der Nullvektor.

8. Schaltungsanordnung zur Durchführung des Verfahrens nach einem der Ansprüche 1 bis 7,
**gekennzeichnet durch**
- eine Bildspeichereinrichtung (102, 103) zur Speicherung der eingangsseitig zugeführten Halbbilder, der das Videosignal zuführbar ist und aus der die Halbbilder mit verdoppelter Halbbildrate auslesbar sind,
- ein Trennfilter (104) zur Aufteilung in Halbbilder mit hochfrequenten und niedrigfrequenten Signalanteilen,
- eine erste Umsetzungseinrichtung (105), der der hochfrequente Signalanteil und ein Bewegungsvektorfeld zuführbar ist und die eine im wesentlichen flimmerbefreiend wirkende Medianfilterung ausführt,
- eine zweite Umsetzungseinrichtung (106), der der niedrigfrequente Signalanteil und das Bewegungsvektorfeld zuführbar ist und die eine im wesentlichen bewegungsrichtige Medianfilterung ausführt,
- erste Mittel (108), **durch** die aus in bezug auf die eingangsseitigen Halbbilder vorliegender Bewegungsinformation für jeden zu erzeugenden Bildpunkt eines auf die verdoppelte Halbbildrate umgesetzten Halbbilds ein auf die Bewegungsphase des zu erzeugenden Halbbilds umgesetzter Bewegungsvektor ermittelbar ist,
- zweite Mittel (108), **durch** ein Aufdeckungsbereich für das zu erzeugende Halbbild ermittelbar ist.

## Claims

1. A method for flicker reduction for an apparatus for processing video signals divided into lines having the features:
- a video signal which can be supplied to the input side comprises fields with line skip (A0, B0, A1, B1, A2, B2, ...) and with a first and a second line grid (A0, A1, A2; B0, B1, B2),
- the video signal is separated into a high-frequency signal component and a low-frequency signal component,
- a median filtering (121, 131) acting substantially to eliminate flicker is performed on the high-frequency signal component for conversion to fields with a doubled field rate,
- a median filtering (141, 142) acting substantially correct as to motion is performed on the low-frequency signal component for conversion to fields with a doubled field rate,
- the fields, converted to the doubled field rate, of the high-frequency and low-frequency signal components are combined,
- for each of the signal components fields with alternatingly the first and the second line grid (X1, Y1, X2; X1Y1, Y1X2) with doubled field rate are produced,
- for each of the signal components first (X1), second (X1Y1), third (Y1) and fourth (Y1X2) fields are produced, of which
- the first field (X1) is formed from the input-side field of the first line grid (A1),
- the second field (X1Y1) is formed at least from the input-side fields of the first and second line grids (A1, B1), the picture content of which is converted to the motion phase of the second field to be produced,
- the third field (Y1) is formed at least from the input-side field of the second line grid (B1) by a grid conversion,
- the fourth field (Y1 X2) is formed at least from the input-side field of the second line grid (B1) and a field of the first line grid (A2) which follows this, the picture content of which is converted to the motion phase of the fourth field to be produced, wherein
- for the conversion to the motion phase of the respective field to be produced, for each picture element of this field a motion vector is determined in dependence on the motion phase which it assumes with respect to the picture elements of its input-side fields from which it is produced.

2. A method according to Claim 1,
**characterised in that** picture elements which lie in exposure areas (108) are determined for the fields to be produced,
**in that** a luminance of zero is preset for a picture element, lying in an exposure area, of the respective field to be produced for the high-frequency signal component and a median filtering (142b) with singly weighted input picture elements is carried out for the low-frequency signal component,
**in that** a median filtering (121) that substantially acts in grid dominant manner is carried out for a picture element not lying in an exposure area for the high-frequency signal component, and a centrally weighted median filtering (142a) is carried out for the low-frequency signal component.

3. A method according to Claim 1 or 2,
**characterised in that** for the formation of the second field (X1Y1) of the high-frequency signal component, a picture element to be produced at a picture element site (120) is formed by a median filtering from those picture elements (125, 126) of the input-side fields of the first and second line grids (A1, B1) which are produced by a displacement of the picture element sites (122, 123) corresponding to the picture element site by the motion vector (124) determined for this picture element in the backward direction of movement or forward direction of movement, and from a predetermined value ("0")
**and in that** for the formation of the fourth field (Y1X2) of the high-frequency signal component, a picture element to be produced at a picture element site is formed by a median filtering from those picture elements of the input-side field of the second line grid (B1) and of the following input-side field of the first line grid (A2), which are produced by a displacement of the picture element sites corresponding to the picture element site by the motion vector determined for this picture element in the backward direction of movement or forward direction of movement, and from the predetermined value.

4. A method according to Claim 1, 2 or 3,
**characterised in that** for the formation of the third field (Y1) of the high-frequency signal component, a picture element to be produced at a picture element site (130) is formed by a median filtering from those picture elements (135, 136) of the input-side field of the first line grid (A1) and of the following input-side field of the first line grid (A2), which are produced by a displacement of the picture element sites (132, 134) corresponding to the picture element site by the motion vector (137) determined for this picture element in the backward direction of movement or forward direction of movement, and from the picture element (133), obtained by an interline interpolation, of the input-side field of the second line grid (B1) of the corresponding picture element site.

5. A method according to one of Claims 2 to 4,
**characterised in that** the centrally weighted median filtering (142a) is carried out for the determination of the picture elements of the second and fourth fields (X1Y1, Y1X2) of the low-frequency signal component, whereby a picture element to be produced at a picture element site (150) is formed by a median filtering (142a) from those picture elements of the input-side field of the first and second line grids (A1, B1) or of the second line grid (B1) and of the following first line grid (A2), which are produced by a displacement of the picture element sites (157, 158) corresponding to the picture element site by the motion vector (152) determined for this picture element in the backward direction of movement or forward direction of movement, whereby the picture elements of these resultant picture element sites (153, 154) are taken into consideration in multiple weighting, the picture elements (155) surrounding this picture element site and a picture element (151) of the second or fourth field, which is produced directly before this, in single weighting.

6. A method according to Claim 2 to 5,
**characterised in that** the singly weighted median filtering (142b) is carried out for the determination of the picture elements of the second and fourth fields (X1Y1, Y1X2) of the low-frequency signal component, whereby a picture element to be produced at a picture element site (160) is formed by a median filtering (142b) from those picture elements of the input-side field of the first and second line grids (A1, B1) or of the second line grid (B1) and of the following first line grid (A2), which are produced by a displacement of the picture elements (161, 162) corresponding to the picture element site by the motion vector determined for this picture element (160) in the backward direction of movement or forward direction of movement, and also by the corresponding picture element (162) of the field of the second line grid (B1) or of the following first line grid (A2).

7. A method according to Claim 6,
**characterised in that** for the determination of the motion vector for the singly weighted median filtering, a motion vector which is available in its surroundings (155) is selected, and, if one is not available, the zero vector is selected.

8. A circuit arrangement for performing the method according to one of Claims 1 to 7,
**characterised by**
- a picture memory device (102, 103) for storing the fields supplied on the input side, to which the video signal can be supplied and from which the fields can be read out at doubled field rate,
- a separating filter (104) for division into fields with high-frequency and low-frequency signal components,
- a first conversion device (105), to which the high-frequency signal component and a motion vector field can be supplied and which carries out a median filtering that acts substantially to eliminate flicker,
- a second conversion device (106), to which the low-frequency signal component and the motion vector field can be supplied and which carries out a median filtering that is substantially correct with respect to motion,
- first means (108), by which, from motion information available with respect to the input-side fields, a motion vector converted to the motion phase of the field to be produced can be determined for each picture element to be produced of a field converted to the doubled field rate,
- second means (108), by which an exposure area for the field to be produced can be determined.

## Revendications

1. Procédé de réduction du scintillement dans un appareil de traitement de signaux vidéos répartis en lignes ayant les caractéristiques suivantes :
- un signal vidéo appliqué à l'entrée comporte des demi-images ou trames avec des sauts de lignes (A0, B0, A1, B1, A2, B2...) ainsi qu'un premier et second tramage de lignes (A0, A1, A2 ; B0, B1, B2),
- le signal vidéo est séparé en une partie haute fréquence et une partie basse fréquence,
- on applique à la partie haute fréquence un filtrage médian (121, 131) fonctionnant essentiellement pour éliminer le scintillement, pour la conversion de trames avec une fréquence de trame doublée,
- on soumet la partie basse fréquence du signal à un filtrage médian (141, 142) fonctionnant essentiellement avec une direction de mouvement correcte pour transformer en des trames à fréquence de trame doublée,
- les trames des parties haute fréquence et basse fréquence du signal à fréquence de trame doublée sont réunies,
- pour chacune des parties de signal on génère des trames ayant les premiers et seconds tramages de lignes (X1, Y1, X2 ; X1Y1, Y1X2) alternées, à fréquence de trame double,
- pour chaque partie de signal on génère des premières trames (X1), des secondes trames (X1Y1), des troisièmes trames (Y1) et des quatrièmes trames (Y1X2) parmi lesquelles,
- la première trame (X1) est formée à partir de la trame appliquée à l'entrée correspondant au premier tramage de ligne (A1),
- la seconde trame (X1Y1) est composée des trames appliquées à l'entrée correspondant au premier et au second tramage de lignes (A1, B1) dont on convertit le contenu de l'image à la phase de mouvement de la seconde trame à générer,
- la troisième trame (Y1) est formée au moins de la trame appliquée à l'entrée du second tramage de lignes (B1) par conversion de tramage,
- la quatrième trame (Y1X2) est formée à partir de la trame appliquée à l'entrée du second tramage de lignes (B1) et d'une trame suivante du premier tramage de lignes (A2) dont le contenu d'images est transformé à la phase du mouvement de la quatrième trame à obtenir, et
- pour la conversion de la phase du mouvement de la trame respective à obtenir, pour chaque point image de cette trame on détermine un vecteur de mouvement en fonction de la phase de mouvement qu'il prend par rapport au point image de ces trames appliquées à l'entrée et à partir desquelles il est forrné.

2. Procédé de réduction du scintillement selon la revendication 1,
**caractérisé en ce que**
pour les trames à former on détermine des points images qui se situent dans des zones de dégagement (108), pour un point image de la trame à former respectivement, et qui se situe dans une zone de dégagement, on prédétermine une luminance égale à 0 pour la partie de signal haute fréquence et pour la partie basse fréquence du signal on effectue un filtrage médian (142b) avec des points images d'entrée à pondération simple, et pour un point image qui ne se situe pas dans une zone dégagée, pour la partie haute fréquence du signal on effectue un filtrage médian (121) ayant pour effet principale un tramage dominant et pour la partie basse fréquence du signal on effectue un filtrage médian à pondération centrale (142a).

3. Procédé de réduction du scintillement selon la revendication 1 ou 2,
**caractérisé en ce que**
pour former la seconde trame (X1Y1) de la partie haute fréquence du signal on forme un point image à générer en une zone de points images (121) par filtrage médian à partir des points images (125, 126) des trames appliquées à l'entrée correspondant au premier et au second tramages de lignes (A1, B1), qui résultent d'un décalage des zones de points images (122, 123) correspondant à la zone de points images que l'on obtient avec le vecteur de mouvement (124) déterminé pour ce point image, dans la direction du mouvement avant ou la direction du mouvement arrière et à partir d'une valeur prédéterminée (« 0 »), et
pour former la quatrième trame (Y1X2) de la partie haute fréquence du signal on forme un point image à obtenir dans une zone de points images par un filtrage médian à partir des points images de la trame appliquée à l'entrée correspondant au second tramage de lignes (B1) et de la trame suivante appliquée à l'entrée correspondant au premier tramage de lignes (A2) résultant d'un décalage des zones de points images correspondant à la zone de points images suivant le vecteur de mouvement obtenu pour ce point image dans la direction de mouvement arrière ou la direction de mouvement avant, et à partir de la valeur prédéterminée.

4. Procédé de réduction du scintillement selon les revendications 1, 2, 3,
**caractérisé en ce que**
pour former la troisième trame (Y1) de la partie haute fréquence du signal on forme le point image à obtenir dans une zone de point image (130) par un filtrage médian à partir des points images (135, 136) de la trame appliquée à l'entrée correspondant au premier tramage de lignes (A1) et de la trame suivante appliquée à l'entrée correspondant à la premier tramage de lignes (A2) résultant d'un décalage des zones de points images (132, 134) correspondant à la zone de points images, décalées du vecteur de mouvement (137) obtenu pour ce point image, dans la direction de mouvement arrière ou la direction de mouvement avant, et à partir du point image (133) obtenu par une interpolation de lignes intermédiaires de la trame appliquée à l'entrée correspondant au second tramage de lignes (B1) de la zone de points images correspondante.

5. Procédé de réduction du scintillement selon l'une des revendications 2 à 4,
**caractérisé en ce qu'**
on effectue le filtrage médian à pondération centrale (142a) pour déterminer les points images de la seconde et de la quatrième trame (X1Y1, Y1X2) de la partie basse fréquence du signal,
et on forme le point image à obtenir dans une zone de points images (150) par un filtrage médian (142a) des points images de la trame appliquée à l'entrée correspondant aux premier et seconde tramages de lignes (A1, B1) ou au second tramage de lignes (B1) et au premier tramage de lignes (A2) suivant, obtenu par un décalage des zones de points images (157, 158) correspondant aux points images, suivant le vecteur de mouvement (152) obtenu pour ce point image, dans la direction de mouvement arrière ou la direction de mouvement avant,
les points images de ces zones de points images (153, 154) ainsi obtenus étant pris en compte avec une pondération multiple des points images (155) entourant cette zone de points images et un point image (151) généré directement avant pour la seconde et la quatrième trame à obtenir, avec une pondération simple.

6. Procédé de réduction du scintillement selon les revendications 2 à 5,
**caractérisé en ce qu'**
on effectue un filtrage médian à pondération simple (142b) pour déterminer les points images de la seconde et de la quatrième trame (X1Y1, Y1X2) de la partie basse fréquence du signal,
et pour cela on forme le point image à obtenir dans une zone de points images (160) par filtrage médian (142b) à partir des points images de la trame appliquée à l'entrée correspondant aux premier et second tramages de lignes (A1, B1), ou au second tramage de lignes (B1) et au premier tramage de lignes (A2) suivant, résultant d'un décalage des points images (161, 162) correspondant à la zone de points images selon le vecteur de mouvement obtenu pour ce point image (160) dans la direction de mouvement arrière ou de la direction de mouvement avant, ainsi que par le point image correspondant (162) de la trame avec le second tramage de lignes (B1) ou le premier traînage de lignes (A2) suivant.

7. Procédé de réduction du scintillement selon la revendication 6,
**caractérisé en ce que**
pour déterminer le vecteur de mouvement pour le filtrage médian à pondération simple on sélectionne un vecteur de mouvement existant dans son environnement (155) et si un tel vecteur n'existe pas on prend le vecteur (O).

8. Circuit pour la mise en oeuvre du procédé selon l'une des revendications 1 à 7,
**caractérisé en ce qu'**
il comprend
- une mémoire d'images (102, 103) pour enregistrer les trames appliquées à l'entrée, cette mémoire recevant le signal vidéo et on extrait de cette mémoire les trames avec une fréquence de trame doublée,
- un filtre séparateur (104) pour diviser les trames en une partie haute fréquence et une partie basse fréquence de signal,
- une première installation de conversion (105) qui reçoit la partie haute fréquence du signal ainsi qu'un champ de vecteurs de mouvement et effectue un filtrage médian qui assure principalement l'élimination du scintillement,
- une seconde installation de conversion (106) recevant la partie basse fréquence du signal et le champ de vecteurs de mouvement qui effectue un filtrage médian essentiellement correct pour le mouvement,
- des premiers moyens (108) qui, à partir d'information de mouvement existant pour les trames appliquées à l'entrée, déterminent pour chaque point image à obtenir, dans une trame convertie à la fréquence de trames double, un vecteur de mouvement converti à la phase de mouvement de la trame à obtenir, et
- des seconds moyens (108) qui déterminent une zone dégagée pour la trame à obtenir.
